# EUROPEAN PATENT SPECIFICATION

(11) **EP 2 861 070 B1**
(45) Date of publication and mention of the grant of the patent: **17.11.2021**
(21) Application number: 13778972.3
(22) Date of filing: 12.04.2013
(51) Int. Cl.: A01N 47/40, A01N 47/24, A01N 51/00, A01N 25/00, A01P 7/04

(54) **N-SUBSTITUTED(6-HALOALKYLPYRIDIN-3-YL)ALKYL SULFOXIMINES AS A SEED TREATMENT TO CONTROL COLEOPTERAN INSECTS**
N-SUBSTITUIERTE (6-HALOALKYLPYRIDIN-3-YL)ALKYL-SULFOXIMINE ALS SAATGUTBEHANDLUNG ZUR BEKÄMPFUNG VON INSEKTEN DER GATTUNG COLEOPTERA
(6-HALOALKYLPYRIDIN-3-YL)ALKYL SULFOXIMINES N-SUBSTITUÉES COMME AGENTS DE TRAITEMENT DE SEMENCES POUR LUTTER CONTRE LES INSECTES COLÉOPTÈRES

(30) Priority: 18.04.2012 US 201261635082 P
(43) Date of publication of application: 22.04.2015
(73) Proprietor: Dow AgroSciences LLC, Indianapolis, IN 46268-1054 (US)
(72) Inventor: HENDRIX, William H., III, Indianapolis, Indiana 46202 (US); TURNBULL, Gary, Winnipeg, Manitoba R3T 5B1 (CA)
(74) Representative: f & e patent
(86) International application number: PCT/US2013/036409
(87) International publication number: WO 2013/158499

(56) References cited:
- WO-A1-2008/057130
- WO-A1-2009/134224
- WO-A1-2010/040623
- WO-A1-2010/074751
- WO-A1-2011/135831
- WO-A2-2007/095229
- WO-A2-2009/014891
- WO-A2-2010/023171
- CA-A1- 2 244 580
- US-A1- 2001 041 724
- US-A1- 2007 203 191
- US-A1- 2012 004 100
- "HELIXxtra - A seed treatment product for control of certain insects and diseases of canola.", , 1 January 2007 (2007-01-01), pages 1-7, XP055238691, Retrieved from the Internet: URL:http://www.syngentacropprotection.com/ pdf/labels/scp935al2e1206.pdf [retrieved on 2016-01-05]
- J. Knodel ET AL: "Impact of planting dates and insecticide Strategies for managing Crucifer flea beetles (Coleoptera: Chrysomelidae) in spring planted canola", Journal of Economic Entomology, vol. 101, no. 3, 31 July 2008 (2008-07-31) , pages 810-821, XP055696067,
- MAIENFISCH P ET AL: "CHEMISTRY AND BIOLOGY OF THIAMETHOXAM: A SECOND GENERATION NEONICOTINOID", PEST MANAGEMENT SCIENCE, WILEY & SONS, BOGNOR REGIS; GB, vol. 57, no. 10, 5 September 2001 (2001-09-05), pages 906-909, 910, XP001125338, ISSN: 1526-498X, DOI: 10.1002/PS.365

## Description

### PRIORITY CLAIM

This application claims the benefit of U.S. Provisional Patent Application Serial No. 61/635,082, filed April 18, 2012.

### TECHNICAL FIELD

Embodiments of the present disclosure relate to methods of using *N*-substituted(6-haloalkylpyridin-3-yl)alkyl sulfoximines as a seed treatment to control flea beetles.

### BACKGROUND

There are more than ten thousand species of pests that cause losses in agriculture. These agricultural losses amount to billions of U.S. dollars each year. Flea beetles are a persistent and severe pest that feed a number of commercial crops, including canola (*Brassicus napus*)*.* Flea beetle control is required to mitigate costly commercial crop losses that not only have a significant economic impact but that may also deprive people of needed food. Currently over 90% of the Canadian canola market is treated with a seed treatment to control flea beetles. Such seed treatment is predominantly performed by the application of neonicotinoid insecticides, such as 3-[(2-Chloro-1,3-thiazol-5-yl)methyl]-5-methyl-N-nitro-1,3,5-oxadiazinan-4-imine, generally referred as "thiamethoxam."

The impact of different insecticide strategies, including the use of thiamethoxam containing products, for mananging crucifer flea beetles in spring-platened canola has been described by J. J. Knodel et al. (Journal of Economic Entomology 2008, 101 (3), 810-821).

Disadvantageously, insects can rapidly develop resistances to insecticides, including insecticides currently utilized in seed treatments to control flea beetles. Hundreds of insect species are resistant to one or more insecticides. The development of resistance to some older insecticides (e.g., DDT, carbamates, organophosphates) is well known. However, resistance has also developed to some newer pesticides.

To mitigate resistance development, insecticide rotation partners and/or alternative insecticides are needed. It would, therefore, be desirable to able to use other insecticides as seed treatments to control insects, such as flea beetles. It would be further desirable if the use of such insecticides as seed treatments facilitated relatively increased insecticidal efficacy as compared to the insecticides conventionally used in seed treatments to control flea beetles.

### BRIEF DESCRIPTION OF DRAWINGS

FIG. 1 is a bar graph illustrating flea beetle feeding damage five days after canola emergence from seed treated with different insecticides;
FIG. 2 is a bar graph illustrating flea beetle feeding damage twenty-seven days after canola emergence from seed treated with different insecticides;
FIG. 3 is a bar graph illustrating canola plant vigor thirteen days after canola emergence from seed treated with different insecticides; and
FIG. 4 is a bar graph illustrating canola plant yield 107 days after canola emergence from seed treated with different insecticides.

### DISCLOSURE

In accordance with one embodiment described herein, a method of controlling insects comprises contacting at least one seed with an insecticide consisting of N-substituted(6-haloalkylpyridin-3-yl)alkyl sulfoximine to control insects in Order Coleopteran, the N-substituted(6-haloalkylpyridin-3-yl)alkyl sulfoximine having the following chemical structure: 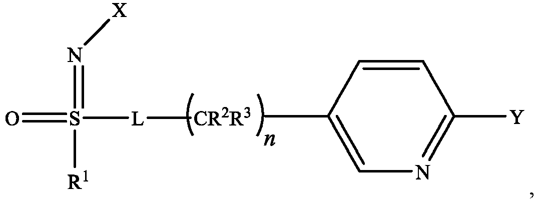 where X comprises nitrogen dioxide (NO₂), cyanide (CN), or COOR⁴; L comprises a single bond or R¹, S, and L taken together comprise a 4-, 5-, or 6-membered ring; R¹ comprises a (C₁-C₄) alkyl; R² and R³ independently comprise hydrogen (H), methyl, ethyl, fluoro, chloro, or bromo; N comprises an integer from 0 to 3; Y comprises a (C₁-C₄) haloalkyl; and R⁴ comprises a (C₁-C₄) alkyl; wherein the insects in the Order *Coleopteran* are flea beetles.

In additional embodiments, a method of controlling insects comprises applying sulfoxaflor to at least one seed to control at least one flea beetle species.

In yet additional embodiments, a method of seed treatment comprises contacting at least one seed with an insecticidally effective amount of sulfoxaflor to protect at least one seed and other plant parts developing from damage effectuated by Coleopteran insects which are flea beetles.

### MODE(S) OF CARRYING OUT THE INVENTION

Methods of using at least one N-substituted(6-haloalkylpyridin-3-yl)alkyl sulfoximine as a seed treatment to control Coleopteran insects are disclosed. As used herein, the phrase "at least one seed" means one seed or a plurality of seeds; for ease of discussion throughout this application, the use of the term "seed(s)" will refer to at least one seed. Likewise, as used herein, the phrase "at least one N-substituted(6-haloalkylpyridin-3-yl)alkyl sulfoximine" means one or more N-substituted(6-haloalkylpyridin-3-yl)alkyl sulfoximines; for ease of discussion throughout this application, the use of the term "N-substituted(6-haloalkylpyridin-3-yl)alkyl sulfoximine(s)" will refer to at least one N-substituted(6-haloalkylpyridin-3-yl)alkyl sulfoximine. As used herein, the term "seed treatment" means and includes contacting seed(s) with an insecticidally effective amount of the N-substituted(6-haloalkylpyridin-3-yl)alkyl sulfoximine(s). As used herein the term, "insecticidally effective amount" means and includes an amount of active material that causes an adverse effect to an insect and includes deviations from natural development, killing, regulation, and the like. Using the N-substituted(6-haloalkylpyridin-3-yl)alkyl sulfoximine(s) as a seed treatment may substantially protect the seed(s) from one or more insect species in the Order Coleoptera (e.g., from feeding damage imposed by the one or more insect species), and may also protect other plant parts (e.g., roots, seedling foliage) developing from the seed(s). For example, the N-substituted(6-haloalkylpyridin-3-yl)alkyl sulfoximine(s) may be translocated during the development of the plant from the seed(s) (e.g., the N-substituted(6-haloalkylpyridin-3-yl)alkyl sulfoximine(s) may spread from the seed(s) to at least one of the roots and/or the foliage of a developing seedling).

The N-substituted(6-haloalkylpyridin-3-yl)alkyl sulfoximine(s) has the following chemical structure: 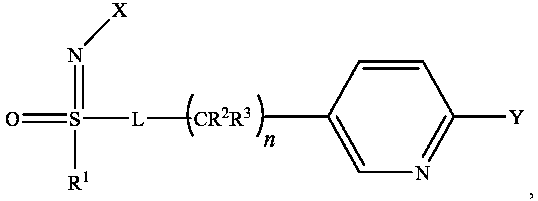 where X represents nitrogen dioxide (NO₂), cyanide (CN), or COOR⁴; L represents a single bond, or R¹, S, and L taken together represent a 4-, 5-, or 6-membered ring; R¹ represents a (C₁-C₄) alkyl; R² and R³ independently represent hydrogen (H), methyl, ethyl, fluoro, chloro, or bromo; N is an integer from 0 to 3; Y represents a (C₁-C₄) haloalkyl; and R⁴ represents a (C₁-C₄) alkyl.

Suitable N-substituted(6-haloalkylpyridin-3-yl)alkyl sulfoximines are described in U.S. Patent Number 7,687,634. By way of non-limiting example, in at least some embodiments, the N-substituted(6-haloalkylpyridin-3-yl)alkyl sulfoximine(s) may be N-[6-difluoromethylpyrid-3-yl]ethyl](methyl)oxido-λ4-sulphanylidenecyanamide, generally referred to as "sulfoxaflor," which has the following chemical structure:

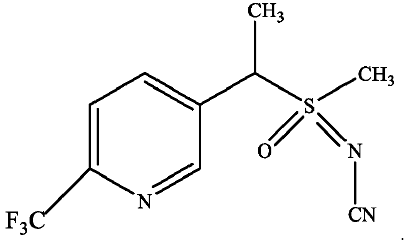

The method of the present disclosure facilitates insecticidal activity against flea beetles in at least one of the following genera: Altica, Anthobiodes, Aphthona, Aphthonaltica, Aphthonoides, Apteopeda, Argopistes, Argopus, Arrhenocoela, Batophila, Blepharida, Chaetocnema, Clitea, Crepidodera, Derocrepis, Dibolia, Disonycha, Epitrix, Hermipyxis, Hermaeophaga, Hespera, Hippuriphila, Horaia, Hyphasis, Lipromima, Liprus, Longitarsus, Luperomorpha, Lythraria, Manobia, Mantura, Meishania, Minota, Mniophila, Neicrepidodera, Nonarthra, Novofoudrasia, Ochrosis, Oedionychis, Oglobinia, Omeisphaera, Ophrida, Orestia, Paragopus, Pentamesa, Philopona, Phygasia, Phyllotreta, Podagrica, Podagricomela, Podontia, Pseudodera, Psylliodes, Sangariola, Sinaltica, Sphaeroderma, Systena, Trachyaphthona, Xuthea, and Zipangia. In one or more embodiments, the method of the present disclosure may be used to control at least one of Phyllotreta armoraciae (horseradish flea beetle), Phyllotreta cruciferae (canola flea beetle), Phyllotreta pusilla (western black flea beetle), Phyllotreta nemorum (striped turnip flea beetle), Phyllotreta robusta (garden flea beetle), Phyllotreta striolata (striped flea bettle), Phyllotreta undulata, Psylliodes chrysocephala, and Psylliodes punctulata (hop flea beetle). In additional embodiments, the method of the present disclosure may be used to control at least one of Altica ambiens (alder flea beetle), Altica canadensis (prairie flea beetle), Altica chalybaea (grape flea beetle), Altica prasina (poplar flea beetle), Altica rosae (rose flea beetle), Altica Sylvia (blueberry flea beetle), Altica ulmi (elm flea beetle), Chaetocnema pulicaria (corn flea beele), Chaetocnema conofinis (sweet potato flea beetle), Epitrix cucumeris (potato flea beetle), Systena blanda (palestripped flea beetle), and Systena frontalis (redheaded flea beetle).

The seed(s) may be any type of seed. The seed(s) may, for example, be a seed produced by a higher plant, such as a dicotyledonous plant or a monocotyledonous plant. In at least some embodiments, the seed(s) may be produced by a consumable plant, such as a commercial crop plant. As a non-limiting example, the seed(s) may be produced from a plant in the family Brassicaceae (mustard family), such as a plant in the genus Brassica including, for example, one of the following: B. napus (rapeseed, including cultivars such as, canola, and rutabaga), B. juncea (Indian mustard), B. carinata (Abyssinian mustard), B. rapa (turnip), B. oleracea (wild cabbage, including cultivars such as, kale, cabbage, broccoli, cauliflower, brussels sprouts, etc.) B. rupestris (brown mustard), B. septiceps (seventop mustard), B. nigra (black mustard), B. narinosa (broadbeaked mustard), B. perviridus (mustard spinach), B. tournefortii (asian mustard), and B. fructiculosa (Mediterranean cabbage). In additional embodiments, the seed(s) may be produced from a different plant including, but not limited to, one of the following: Glycine max (soybean), Linum usitatissimum (linseed/flax), Zea mays (maize), Carthamus tinctorius (safflower), Helianthus annuus (sunflower), Nicotiana tabacum (tobacco), Arabidopsis thaliana, Betholettia excelsa (Brazil nut), Ricinus communis (castor bean), Cocus nucifera (coconut), Coriandrum sativum (coriander), Gossypium spp. (cotton), Arachis hypogaea (groundnut), Simmondsia chinensis (jojoba), Elaeis gdineeis (oil palm), Olea eurpaea (olive), Oryza sativa (rice), Cucurbita maxima (squash), Hordeum vulgare (barley), Triticum aestivum (wheat), and Lemnaceae spp (duckweed). The seed(s) may be produced from any genotype and cultivar of a plant, the selection of which is within the discretion of the practitioner. In at least some embodiments, the seed(s) is produced by a canola plant (i.e., the at least one is at least one canola seed).

The N-substituted(6-haloalkylpyridin-3-yl)alkyl sulfoximine(s) may be applied to the seed(s) by any of a variety of conventional techniques (e.g., spraying, coating, dusting, and soaking). The sulfoximine can remain substantially on the surface of the seed in the seed treatment during seed storage. When the seed is planted and begins to germinate in the soil, the sulfoxamine can be absorbed by the plant roots and shoot and translocate to the above-ground plant tissues. Suitable application processes include, for example, those listed in P. Kosters et. al., "Seed Treatment: Progress and Prospects," 1994 BCPC Mongraph No. 57. An insecticidally effective amount of the at least one N-substituted(6-haloalkylpyridin-3-yl)alkyl sulfoximine may be applied to the seed(s) at any time from the harvest of the seed(s) from an associated plant to the sowing of the seed(s). The N-substituted(6-haloalkylpyridin-3-yl)alkyl sulfoximine(s) may be applied to the seed(s) before the planting of the seed(s), during the planting of the seed(s), or a combination thereof. If the N-substituted(6-haloalkylpyridin-3-yl)-alkyl sulfoximine(s) is applied before the planting of the seed(s), the seed treatment may occur at any time within a range from substantially immediately before planting to about 12 months before planting. Multiple applications of the N-substituted(6-halo-alkylpyridin-3-yl)alkyl sulfoximine(s) may be applied to the seed(s).

The N-substituted(6-haloalkylpyridin-3-yl)alkyl sulfoximine(s) may be applied to (e.g., dusted on) the seed(s) without further treatment, or a formulation including the N-substituted(6-haloalkylpyridin-3-yl)alkyl sulfoximine(s) and at least one inert carrier may be applied to the seed(s). Utilizing a formulation to treat the seed(s) may, for example, enhance one or more of ease of application, handling, storage, and maximum pesticidal activity. If a formulation is used, the at least one inert carrier may be a solid carrier (e.g., talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, combinations thereof, and the like), or may be a liquid carrier (e.g., water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, combinations thereof, and the like). In addition, if a formulation is used, the N-substituted(6-haloalkylpyridin-3-yl)alkyl sulfoximine(s) and the at least one inert carrier may be applied in the form of any of a variety of conventional formulation types including, but not limited to, a wettable powder, an emulsifiable concentrate, a suspension concentrate, an dilute emulation (e.g., aqueous emulation), a dilute suspension (e.g., aqueous suspension), a directly sprayable or dilutable solution, a coatable paste, and a dust. The aforementioned formulation types can be prepared according to procedures that are conventional in the agricultural chemical art.

If, for example, the formulation is applied to the seed(s) as a wettable powder, the wettable powder may comprise a mixture the N-substituted(6-haloalkyl-pyridin-3-yl)alkyl sulfoximine(s) and at least one solid carrier. The mixture may be compacted to form water-dispersible granules. The at least one solid carrier and the at least one surfactant may be blended with the N-substituted(6-haloalkylpyridin-3-yl)alkyl sulfoximine(s) and milled. A concentration of the N-substituted(6-haloalkylpyridin-3-yl)alkyl sulfoximine(s) in the wettable powder may be within a range of from about 10 percent by weight to about 90 percent by weight, such as from about 25 percent by weight to about 75 percent by weight. The wettable powder may, optionally, include at least one surfactant, such as a sulfonated lignin, a condensed naphthalenesulfonate, a naphthalenesulfonate, an alkylbenzenesulfonate, an alkyl sulfate, and a non-ionic surfactant (e.g., anethylene oxide adduct of an alkyl phenol). If present, a concentration at least one surfactant in the wettable powder may be within a range of from about 0.5 percent by weight to about 10 percent by weight. The at least one surfactant may aid in at least one of the formation and the stabilization of the wettable powder.

If, for example, the formulation is applied to the seed(s) as an emulsifiable concentrate, the emulsifiable concentrate may include the at least one N-substituted(6-haloalkylpyridin-3-yl)alkyl sulfoximine, and at least one liquid carrier. The N-substituted(6-haloalkylpyridin-3-yl)alkyl sulfoximine(s) may be substantially dissolved in the at least one liquid carrier. The emulsifiable concentrate may, optionally, include at least one emulsifier at a concentration within a range of from about 1 percent by weight to about 30 percent by weight. As used herein, the term "emulsifier" means and includes a material that stabilizes a suspension of droplets of one liquid phase in another liquid phase. The at least one emulsifier may be non-ionic, anionic, cationic, or a combination thereof. Non-limiting examples of non-ionic emulsifiers include polyalkylene glycol ethers and condensation products of alkyl and aryl phenols, aliphatic alcohols, aliphatic amines or fatty acids with ethylene oxide, propylene oxides such as the ethoxylated alkyl phenols, and carboxylic esters solubilized with the polyol or polyoxyalkylene. Non-limiting examples of anionic emulsifiers include oil-soluble salts (e.g., calcium) of alkylaryl sulphonic acids, oil-soluble salts, sulfated polyglycol ethers, and salts of phosphated polyglycol ether. Non-limiting examples of cationic emulsifiers include quaternary ammonium compounds, and fatty amine salts. The emulsifiable concentrate may also contain other compatible additives, such as plant growth regulators and other biologically active compounds used in agriculture. A concentration of the N-substituted(6-haloalkyl-pyridin-3-yl)alkyl sulfoximine(s) in the emulsifiable concentrate may, for example, be within a range of from about 10 percent by weight to about 50 percent by weight. In one or more embodiments, the emulsifiable concentrate may be diluted with water and oil to form spray mixtures in the form of oil-in-water emulsions.

If, for example, the formulation is applied to the seed(s) as an aqueous suspension, the aqueous suspension may include the N-substituted(6-haloalkyl-pyridin-3-yl)alkyl sulfoximine(s) dispersed in an aqueous liquid carrier (e.g., water). A concentration of the N-substituted(6-haloalkylpyridin-3-yl)alkyl sulfoximine(s) in the aqueous suspension may be within a range from about 5 to about 50 weight percent. The aqueous suspension may be prepared by finely grinding the N-substituted(6-halo-alkylpyridin-3-yl)alkyl sulfoximine(s), and mixing the N-substituted(6-haloalkyl-pyridin-3-yl)alkyl sulfoximine(s) into the aqueous liquid carrier. The aqueous suspension may, optionally, include at least one surfactant that may aid in the formation and/or the stabilization of the aqueous suspension. Other materials, such as inorganic salts and synthetic or natural gums, may be added to increase one or more of the density and the viscosity of the aqueous suspension.

If, for example, the formulation is applied to the seed(s) as an aqueous emulsion, the aqueous emulsion may include the N-substituted(6-haloalkyl-pyridin-3-yl)alkyl sulfoximine(s) emulsified in an aqueous liquid carrier (e.g., water). A concentration of the N-substituted(6-haloalkylpyridin-3-yl)alkyl sulfoximine(s) in the aqueous emulsion may be within a range from about 5 to about 50 weight percent. The N-substituted(6-haloalkylpyridin-3-yl)alkyl sulfoximine(s) can dissolved in a water-immiscible solvent before preparation of the aqueous emulsion. Non-limiting examples of suitable water-immiscible solvents include aromatic hydrocarbons derived from benzene, such as toluene, xylenes, other alkylated benzenes and the like, and naphthalene derivatives, aliphatic hydrocarbons such as hexane, octane, cyclohexane, and the like, mineral oils from the aliphatic or isoparaffinic series, and mixtures of aromatic and aliphatic hydrocarbons; halogenated aromatic or aliphatic hydrocarbons; vegetable, seed or animal oils such as soybean oil, rape seed oil, olive oil, castor oil, sunflower seed oil, coconut oil, corn oil, cotton seed oil, linseed oil, palm oil, peanut oil, safflower oil, sesame oil, tung oil and the like, and C1-C6 mono-esters derived from vegetable, seed or animal oils; C1-C6 dialkyl amides of C6-C20 saturated and unsaturated aliphatic carboxylic acids, such as, N-N-dimethyl alkyl amide; C1-C12 esters of aromatic carboxylic acids and dicarboxylic acids and C1-C12 esters of aliphatic and cyclo-aliphatic carboxylic acids; C4-C12 polyesters of dihydric, trihydric, or other lower polyalcohols such as, propylene glycol dioleate, di-octyl succinate, di-butyl adipate, di-octyl phthalate and the like. The aqueous emulsion may be prepared by emulsifying the N-substituted(6-haloalkylpyridin-3-yl)alkyl sulfoximine(s) or a water-immiscible solution thereof into the aqueous liquid carrier. The aqueous emulsion may, optionally, include at least one surfactant that may aid in at least one of the formation and the stabilization of the aqueous emulsion.

If, for example, the formulation is applied to the seed(s) as a granular dust, the granular formulation may include the N-substituted(6-haloalkylpyridin-3-yl)alkyl sulfoximine(s) dispersed in at least one solid carrier (e.g., kaolin clay, ground volcanic rock, etc.). The at least one solid carrier may be provided as a powder. A concentration of the N-substituted(6-haloalkylpyridin-3-yl)alkyl sulfoximine(s) in the dust may be within a range from about 1 weight percent to about 10 weight percent.

The *N*-substituted(6-haloalkylpyridin-3-yl)alkyl sulfoximine(s), or the formulation including the N-substituted(6-haloalkylpyridin-3-yl)alkyl sulfoximine(s), may, optionally, be applied to the seed(s) consecutively with (e.g., before or after) at least one additional material. The at least one additional material may be a material or compound that has a desired utility and that does not substantially interfere with the insecticidal activity of the N-substituted(6-haloalkylpyridin-3-yl)alkyl sulfoximine(s). Whether or not the at least one additional material substantially interferes with the insecticidal activity of the N-substituted(6-haloalkylpyridin-3-yl)alkyl sulfoximine(s) can be really determined by those of skill in the art using standard test formats including, but not limited to, those involving direct comparisons of the efficacy of the N-substituted(6-haloalkyl-pyridin-3-yl)alkyl sulfoximine(s) of the present disclosure with and without the at least one additional material. By way of non-limiting example, the at least one additional material may be one or more of at least one adjuvant material and at least one additional pesticide material described below.

The at least one adjuvant material, if used, may be a conventional adjuvant used in the agricultural sciences art including, but not limited to, a wetting agent, a dispersant, a binder, a penetrant, a fertilizer, a buffer, a dye, a sequestering agent, a drift reduction agent, a compatibility agent, a viscosity regulator, an anti-foam agent, a cleaning agent, a surfactant, an emulsifier, combinations thereof, and the like. Suitable adjuvant materials are well known in the agricultural sciences art (e.g., see "Chemistry and Technology of Agrochemical Formulations" edited by D. A. Knowles, copyright 1998 by Kluwer Academic Publishers; also see "Insecticides in Agriculture and Environment—Retrospects and Prospects" by A. S. Perry, I. Yamamoto, I. Ishaaya, and R. Perry, copyright 1998 by Springer-Verlag). In at least some embodiments, the at least one adjuvant material includes at least one binder (e.g., a polyacrylate, a polymethacrylate, a polybutene, a polyisobutylene, a polyether, a polyethyleneamine, a polyethyleneamide, a polyethyleneimine, a polystyrene, a polyurethane, a polyvinylalcohol, a polyvinylpyrrolidone, polyvinylacetate, copolymers derived from such polymers, and combinations thereof) that may enhance the adhesion of the N-substituted(6-haloalkylpyridin-3-yl)alkyl sulfoximine(s) to the seed(s).

The at least one additional pesticide material, if used, may be at least one of a fungicide, and a herbicide, each of which are described in further detail below. For example, the at least one additional pesticide material may be used to control diseases, and plants (e.g., weeds). Further examples of pesticide materials that may be utilized include at least one of a nematocide, a miticide, an arthropodicide, and a bactericide. The N-substituted(6-haloalkylpyridin-3-yl)alkyl sulfoximine(s) and the at least one additional pesticide may, for example, be present in a weight ratio of from about 1:100 to about 100:1.

As used herein, the term "fungicide," means and includes an active material that kills, controls, or otherwise adversely affects the growth of fungi or fungal spores. Non-limiting examples of suitable fungicides that may be used as the at least one additional pesticide material include 2-(thiocyanatomethylthio)-benzothiazole, 2-phenylphenol, 8-hydroxyquinoline sulfate, Ampelomyces, quisqualis, azaconazole, azoxystrobin, Bacillus subtilis, benalaxyl, benomyl, benthiavalicarb-isopropyl, benzylaminobenzene-sulfonate (BABS) salt, bicarbonates, biphenyl, bismerthiazol, bitertanol, blasticidin-S, borax, Bordeaux mixture, boscalid, bromuconazole, bupirimate, calcium polysulfide, captafol, captan, carbendazim, carboxin, carpropamid, carvone, chloroneb, chlorothalonil, chlozolinate, Coniothyrium minitans, copper hydroxide, copper octanoate, copper oxychloride, copper sulfate, copper sulfate (tribasic), cuprous oxide, cyazofamid, cyflufenarnid, cymoxanil, cyproconazole, cyprodinil, dazomet, debacarb, diammonium ethylenebis-(dithiocarbamate), dichlofluanid, dichlorophen, diclocymet, diclomezine, dichloran, diethofencarb, difenoconazole, difenzoquat ion, diflumetorim, dimethomorph, dimoxystrobin, diniconazole, diniconazole-M, dinobuton, dinocap, diphenylamine, dithianon, dodemorph, dodemorph acetate, dodine, dodine free base, edifenphos, epoxiconazole, ethaboxam, ethoxyquin, etridiazole, famoxadone, fenamidone, fenarimol, fenbuconazole, fenfuram, fenhexamid, fenoxanil, fenpiclonil, fenpropidin, fenpropimorph, fentin, fentin acetate, fentin hydroxide, ferbam, ferimzone, fluazinam, fludioxonil, flumorph, fluopicolide, fluoroimide, fluoxastrobin, fluquinconazole, flusilazole, flusulfamide, flutolanil, flutriafol, folpet, formaldehyde, fosetyl, fosetyl-aluminium, fuberidazole, furalaxyl, furametpyr, guazatine, guazatine acetates, GY-81, hexachlorobenzene, hexaconazole, hymexazol, imazalil, imazalil sulfate, imibenconazole, iminoctadine, iminoctadine triacetate, iminoctadine tris(albesilate), ipconazole, iprobenfos, iprodione, iprovalicarb, isoprothiolane, kasugamycin, kasugamycin hydrochloride hydrate, kresoxim-methyl, mancopper, mancozeb, maneb, mepanipyrim, mepronil, mercuric chloride, mercuric oxide, mercurous chloride, metalaxyl, mefenoxam, metalaxyl-M, metam, metam-ammonium, metam-potassium, metam-sodium, metconazole, methasulfocarb, methyl iodide, methyl isothiocyanate, metiram, metominostrobin, metrafenone, mildiomycin, myclobutanil, nabam, nitrothal-isopropyl, nuarimol, octhilinone, ofurace, oleic acid (fatty acids), orysastrobin, oxadixyl, oxine-copper, oxpoconazole fumarate, oxycarboxin, pefurazoate, penconazole, pencycuron, pentachlorophenol, pentachlorophenyl laurate, penthiopyrad, phenylmercury acetate, phosphonic acid, phthalide, picoxystrobin, polyoxin B, polyoxins, polyoxorim, potassium bicarbonate, potassium hydroxyquinoline sulfate, probenazole, prochloraz, procymidone, propamocarb, propamocarb hydrochloride, propiconazole, propineb, proquinazid, prothioconazole, pyraclostrobin, pyrazophos, pyributicarb, pyrifenox, pyrimethanil, pyroquilon, quinoclamine, quinoxyfen, quintozene, Reynoutria sachalinensis extract, silthiofam, simeconazole, sodium 2-phenylphenoxide, sodium bicarbonate, sodium pentachlorophenoxide, spiroxamine, sulfur, SYP-Z071, tar oils, tebuconazole, tecnazene, tetraconazole, thiabendazole, thifluzamide, thiophanate-methyl, thiram, tiadinil, tolclofos-methyl, tolylfluanid, triadimefon, triadimenol, triazoxide, tricyclazole, tridemorph, trifloxystrobin, triflumizole, triforine, triticonazole, validamycin, vinclozolin, zineb, ziram, zoxamide, Candida oleophila, Fusarium oxysporum, Gliocladium spp., Phlebiopsis gigantean, Streptomyces griseoviridis, Trichoderma spp., (RS)--N-(3,5-dichlorophenyl)-2-(methoxymethyl)-succinimide, 1,2-dichloropropane, 1,3-dichloro-1,1,3,3-tetrafluoroacetone hydrate, 1-chloro-2,4-dinitronaphthalene, 1-chloro-2-nitropropane, 2-(2-heptadecyl-2-imidazolin-1-yl)ethanol, 2,3-dihydro-5-phenyl-1,4-dithi-ine 1,1,4,4-tetraoxide, 2-methoxyethylmercury acetate, 2-methoxyethylmercury chloride, 2-methoxyethylmercury silicate, 3-(4-chlorophenyl)-5-methylrhodanine, 4-(2-nitroprop-1-enyl)phenyl thiocyanateme: ampropylfos, anilazine, azithiram, barium polysulfide, Bayer 32394, benodanil, benquinox, bentaluron, benzamacril; benzamacril-isobutyl, benzamorf, binapacryl, bis(methylmercury) sulfate, bis(tributyltin) oxide, buthiobate, cadmium calcium copper zinc chromate sulfate, carbamorph, CECA, chlobenthiazone, chloraniformethan, chlorfenazole, chlorquinox, climbazole, copper bis(3-phenylsalicylate), copper zinc chromate, cufraneb, cupric hydrazinium sulfate, cuprobam, cyclafuramid, cypendazole, cyprofuram, decafentin, dichlone, dichlozoline, diclobutrazol, dimethirimol, dinocton, dinosulfon, dinoterbon, dipyrithione, ditalimfos, dodicin, drazoxolon, EBP, ESBP, etaconazole, etem, ethirim, fenaminosulf, fenapanil, fenitropan, fluotrimazole, furcarbanil, furconazole, furconazole-cis, furmecyclox, furophanate, glyodine, griseofulvin, halacrinate, Hercules 3944, hexylthiofos, ICIA0858, isopamphos, isovaledione, mebenil, mecarbinzid, metazoxolon, methfuroxam, methylmercury dicyandiamide, metsulfovax, milneb, mucochloric anhydride, myclozolin, N-3,5-dichlorophenyl-succinimide, N-3-nitrophenylitaconimide, natamycin, N-ethylmercurio-4-toluenesulfonanilide, nickel bis(dimethyldithiocarbamate), OCH, phenylmercury dimethyldithiocarbamate, phenylmercury nitrate, phosdiphen, prothiocarb; prothiocarb hydrochloride, pyracarbolid, pyridinitril, pyroxychlor, pyroxyfur, quinacetol; quinacetol sulfate, quinazamid, quinconazole, rabenzazole, salicylanilide, SSF-109, sultropen, tecoram, thiadifluor, thicyofen, thiochlorfenphim, thiophanate, thioquinox, tioxymid, triamiphos, triarimol, triazbutil, trichlamide, urbacid, XRD-563, and zarilamid, and any combinations thereof.

As used herein, the term "herbicide," means and includes an active material that kills, controls, or otherwise adversely affects the growth of plants. Non-limiting examples of suitable herbicides that may be used as the at least one additional pesticide material include amide herbicides such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; anilide herbicides such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; arylalanine herbicides, such as benzoylprop, flamprop and flamprop-M; chloroacetanilide herbicides, such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; sulfonanilide herbicides, such as benzofluor, perfluidone, pyrimisulfan and profluazol; sulfonamide herbicides, such as asulam, carbasulam, fenasulam and oryzalin; antibiotic herbicides, such as bilanafos; benzoic acid herbicides, such as chloramben, dicamba, 2,3,6-TBA and tricamba; pyrimidinyloxybenzoic acid herbicides, such as bispyribac and pyriminobac; pyrimidinylthiobenzoic acid herbicides, such as pyrithiobac; phthalic acid herbicides, such as chlorthal; picolinic acid herbicides such as aminopyralid, clopyralid and picloram; quinolinecarboxylic acid herbicides, such as quinclorac and quinmerac; arsenical herbicides, such as cacodylic acid, CMA, DSMA, hexaflurate, MAA, MAMA, MSMA, potassium arsenite and sodium arsenite; benzoylcyclohexanedione herbicides, such as mesotrione, sulcotrione, tefuryltrione and tembotrione; benzofuranyl alkylsulfonate herbicides, such as benfuresate and ethofumesate; carbamate herbicides, such as asulam, carboxazole chlorprocarb, dichlormate, fenasulam, karbutilate and terbucarb; carbanilate herbicides, such as barban, BCPC, carbasulam, carbetamide, CEPC, chlorbufam, chlorpropham, CPPC, desmedipham, phenisopham, phenmedipham, phenmedipham-ethyl, propham and swep; cyclohexene oxime herbicides, such as alloxydim, butroxydim, clethodim, cloproxydim, cycloxydim, profoxydim, sethoxydim, tepraloxydim and tralkoxydim; cyclopropylisoxazole herbicides, such as isoxachlortole and isoxaflutole; dicarboximide herbicides, such as benzfendizone, cinidon-ethyl, flumezin, flumiclorac, flumioxazin and flumipropyn; dinitroaniline herbicides, such as benfluralin, butralin, dinitramine, ethalfluralin, fluchloralin, isopropalin, methalpropalin, nitralin, oryzalin, pendimethalin, prodiamine, profluralin and trifluralin; dinitrophenol herbicides, such as dinofenate, dinoprop, dinosam, dinoseb, dinoterb, DNOC, etinofen and medinoterb; diphenyl ether herbicides, such as ethoxyfen; nitrophenyl ether herbicides, such as acifluorfen, aclonifen, bifenox, chlomethoxyfen, chlornitrofen, etnipromid, fluorodifen, fluoroglycofen, fluoronitrofen, fomesafen, furyloxyfen, halosafen, lactofen, nitrofen, nitrofluorfen and oxyfluorfen; dithiocarbamate herbicides, such as dazomet and metam; halogenated aliphatic herbicides, such as alorac, chloropon, dalapon, flupropanate, hexachloroacetone, iodomethane, methyl bromide, monochloroacetic acid, SMA and TCA; imidazolinone herbicides, such as imazamethabenz, imazamox, imazapic, imazapyr, imazaquin and imazethapyr; inorganic herbicides, such as ammonium sulfamate, borax, calcium chlorate, copper sulfate, ferrous sulfate, potassium azide, potassium cyanate, sodium azide, sodium chlorate and sulfuric acid; nitrile herbicides, such as bromobonil, bromoxynil, chloroxynil, dichlobenil, iodobonil, ioxynil and pyraclonil; organophosphorus herbicides, such as amiprofos-methyl, anilofos, bensulide, bilanafos, butamifos, 2,4-DEP, DMPA, EBEP, fosamine, glufosinate, glyphosate and piperophos; phenoxy herbicides, such as bromofenoxim, clomeprop, 2,4-DEB, 2,4-DEP, difenopenten, disul, erbon, etnipromid, fenteracol and trifopsime; phenoxyacetic herbicides, such as 4-CPA, 2,4-D, 3,4-DA, MCPA, MCPA-thioethyl and 2,4,5-T; phenoxybutyric herbicides, such as 4-CPB, 2,4-DB, 3,4-DB, MCPB and 2,4,5-TB; phenoxypropionic herbicides, such as cloprop, 4-CPP, dichlorprop, dichlorprop-P, 3,4-DP, fenoprop, mecoprop and mecoprop-P; aryloxyphenoxypropionic herbicides, such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; phenylenediamine herbicides, such as dinitramine and prodiamine; pyrazolyl herbicides, such as benzofenap, pyrazolynate, pyrasulfotole, pyrazoxyfen, pyroxasulfone and topramezone; pyrazolylphenyl herbicides, such as fluazolate and pyraflufen; pyridazine herbicides, such as credazine, pyridafol and pyridate; pyridazinone herbicides, such as brompyrazon, chloridazon, dimidazon, flufenpyr, metflurazon, norflurazon, oxapyrazon and pydanon; pyridine herbicides such as aminopyralid, cliodinate, clopyralid, dithiopyr, fluroxypyr, haloxydine, picloram, picolinafen, pyriclor, thiazopyr and triclopyr; pyrimidinediamine herbicides, such as iprymidam and tioclorim; quaternary ammonium herbicides, such as cyperquat, diethamquat, difenzoquat, diquat, morfamquat and paraquat; thiocarbamate herbicides, such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vemolate; thiocarbonate herbicides, such as dimexano, EXD and proxan; thiourea herbicides such as methiuron; triazine herbicides, such as dipropetryn, triaziflam and trihydroxytriazine; chlorotriazine herbicides, such as atrazine, chlorazine, cyanazine, cyprazine, eglinazine, ipazine, mesoprazine, procyazine, proglinazine, propazine, sebuthylazine, simazine, terbuthylazine and trietazine; methoxytriazine herbicides, such as atraton, methometon, prometon, secbumeton, simeton and terbumeton; methylthiotriazine herbicides, such as ametryn, aziprotryne, cyanatryn, desmetryn, dimethametryn, methoprotryne, prometryn, simetryn and terbutryn; triazinone herbicides, such as ametridione, amibuzin, hexazinone, isomethiozin, metamitron and metribuzin; triazole herbicides, such as amitrole, cafenstrole, epronaz and flupoxam; triazolone herbicides, such as amicarbazone, bencarbazone, carfentrazone, flucarbazone, propoxycarbazone, sulfentrazone and thiencarbazone-methyl; triazolopyrimidine herbicides, such as cloransulam, diclosulam, florasulam, flumetsulam, metosulam, penoxsulam and pyroxsulam; uracil herbicides, such as butafenacil, bromacil, flupropacil, isocil, lenacil and terbacil; 3-phenyluracils; urea herbicides, such as benzthiazuron, cumyluron, cycluron, dichloralurea, diflufenzopyr, isonoruron, isouron, methabenzthiazuron, monisouron and noruron; phenylurea herbicides, such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; pyrimidinylsulfonylurea herbicides, such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron; triazinylsulfonylurea herbicides, such as chlorsulfuron, cinosulfuron, ethametsulfuron, iodosulfuron, metsulfuron, prosulfuron, thifensulfuron, triasulfuron, tribenuron, triflusulfuron and tritosulfuron; thiadiazolylurea herbicides, such as buthiuron, ethidimuron, tebuthiuron, thiazafluron and thidiazuron; and unclassified herbicides such as acrolein, allyl alcohol, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, flurochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan, and tritac.

The use of the N-substituted(6-haloalkylpyridin-3-yl)alkyl sulfoximine(s), such as sulfoxaflor, as a seed treatment to control Coleopteran insects, namely flea beetles, advantageously mitigates insect resistance development to current insecticides used as seed treatments to control Coleopteran insects, expands the utility and efficacy of N-substituted(6-haloalkylpyridin-3-yl)alkyl sulfoximine as an insecticide, and facilitate increased insecticidal activity and efficacy as compared to insecticides conventionally used as seed treatments to control Coleopteran insects.

The following examples serve to explain embodiments of the present disclosure in more detail. These examples are not to be construed as being exhaustive or exclusive as to the scope of this invention.

### Examples

### Example 1: Comparative Examples

The effectiveness of sulfoxaflor as a canola (Brassica napus) seed treatment to control feeding damage by cabbage flea beetle (Phyllotreta cruciferae) was evaluated against the commercial standard thiamethoxam (Helix Xtra). Canola seeds were sprayed with a range of insecticides, including Helix Xtra at a use rate of about 0.4 milligrams (mg) thiamethoxam ai/seed, spinosyn A and spinosyn D (spinosad) at a low use rate of about 0.2 mg ai/seed and a high use rate of about 0.6 mg ai/seed, spinetoram at a low use rate of about 0.2 mg ai/seed and a high use rate about 0.6 mg ai/seed, and sulfoxaflor at a low use rate of about 0.2 mg ai/seed and a high use rate about 0.6 mg ai/seed. Each treatment was replicated four (4) times. The canola seeds were planted and then exposed to a natural infestation of the cabbage flea beetles soon after emergence.

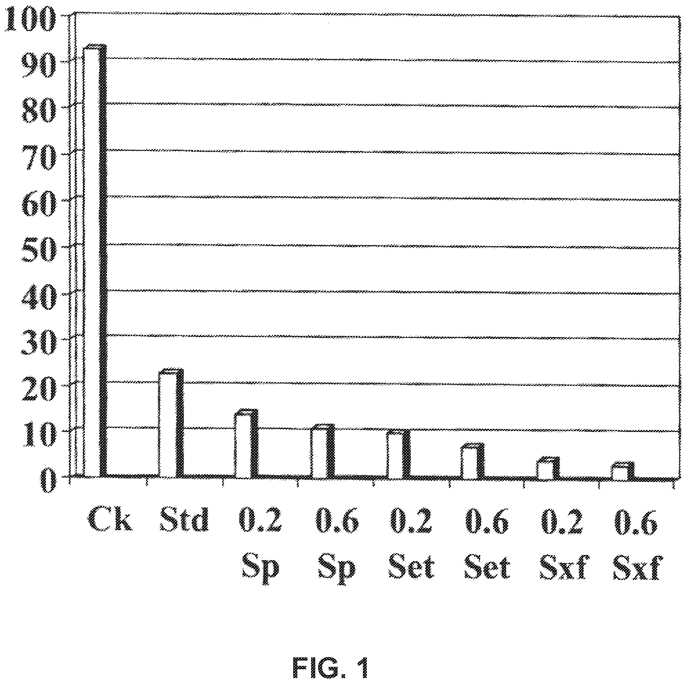

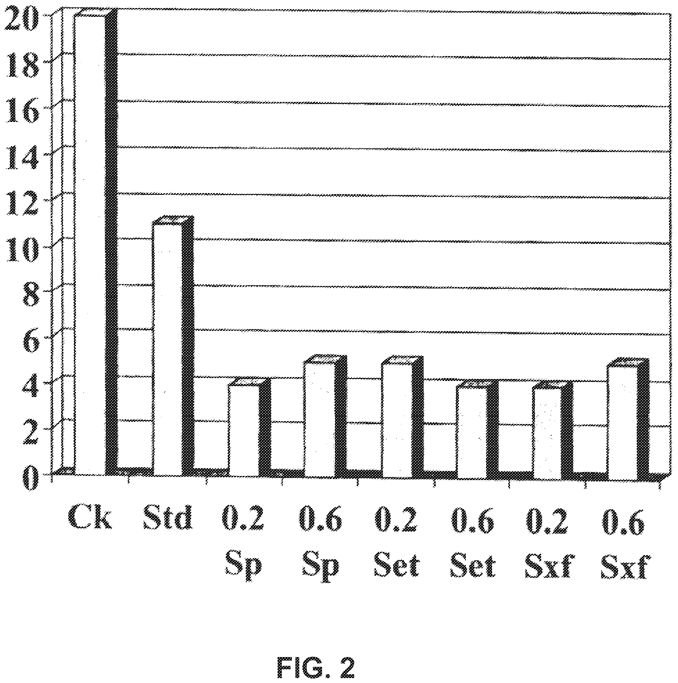

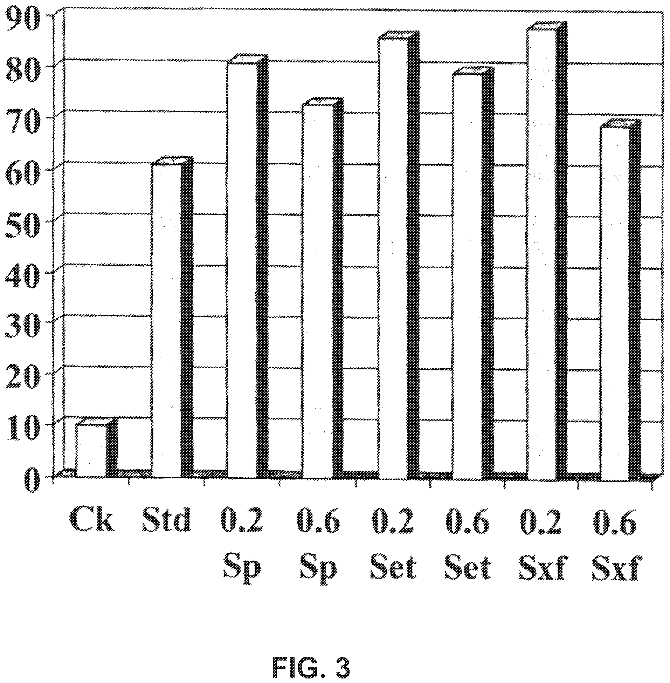

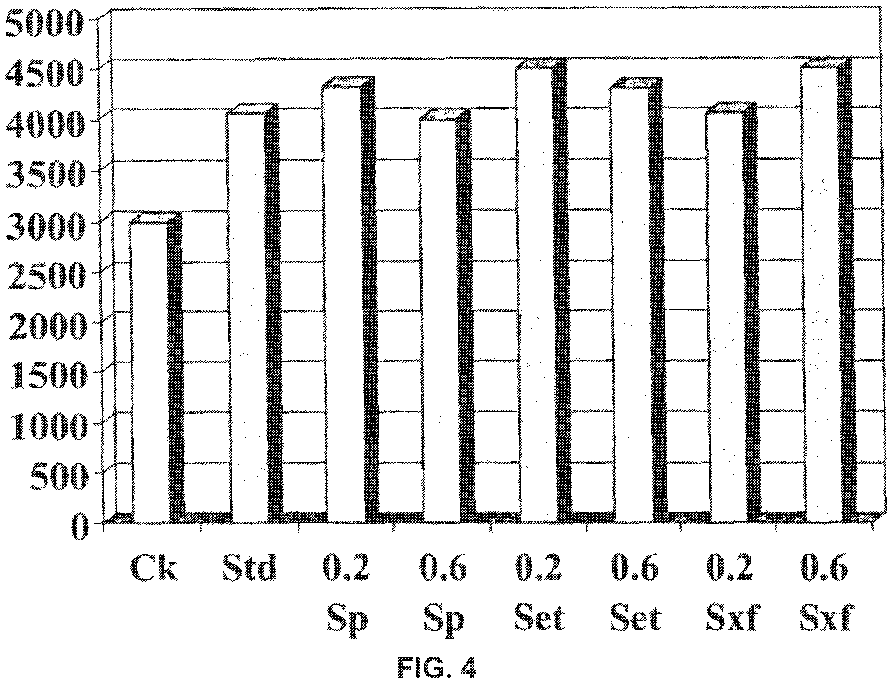

Flea beetle feeding damage was evaluated at five (5) days and twenty-seven (27) days after the canola seed emerged from the ground described above. FIG. 1 shows the flea beetle feeding damage at 5 days, and FIG. 2 shows the flea beetle feeding damage at 27 days. In FIGS. 1 and 2, and in each of FIGS. 3 and 4, described below, "Ck" represents untreated canola seeds, "Std" represents canola seeds treated with Helix Xtra, "Sp" represents canola seeds treated with spinosad, "Set" represents canola seeds treated with Spinetoram, and "Sxf' represents canola seeds treated with sulfoxaflor. As depicted in FIG. 1, both the low rate of sulfoxaflor seed treatment and the high rate of sulfoxaflor facilitated improved insecticidal activity against Phyllotreta cruciferae, as compared to Helix Xtra at 5 days. At 5 days, the low use rate of sulfoxaflor resulted in about 4 percent flea beetle feeding damage, the high use rate of sulfoxaflor resulted in about 3 percent flea beetle feeding damage, and the use of Helix Xtra resulted in about 22 percent flea beetle feeding damage. The untreated canola seeds exhibited about 93 percent flea beetle feeding damage. In addition, as depicted in FIG. 2, both the low use rate of sulfoxaflor and the high use rate of sulfoxaflor facilitated improved insecticidal activity against Phyllotreta cruciferae, as compared to Helix Xtra at 27 days. At 27 days after canola emergence, the low use rate of sulfoxaflor resulted in about 18 percent flea beetle feeding damage, the high use rate of sulfoxaflor resulted in about 23 percent flea beetle feeding damage, and the use of Helix Xtra resulted in about 53 percent flea beetle feeding damage. The untreated canola seeds exhibited about 100 percent flea beetle feeding damage. Each of FIGS. 1 and 2 illustrate that canola seeds treated with sulfoxaflor were significantly better protected against Phyllotreta cruciferae than canola seeds treated with Helix Xtra, which were significantly better protected against Phyllotreta cruciferae than untreated canola seeds.

Canola plant vigor was evaluated at thirteen (13) days after the canola seed emerged from the ground described above. FIG. 3 shows canola plant vigor at 13 days. As depicted in FIG. 3, both the low use rate of sulfoxaflor and the high use rate of sulfoxaflor facilitated improved canola plant vigor as compared to the use of Helix Xtra. The low use rate of sulfoxaflor resulted in about 87 percent canola plant vigor, the high use rate of sulfoxaflor resulted in about 69 percent canola plant vigor, and the use of Helix Xtra resulted in about 61 percent canola plant vigor. The untreated canola seeds exhibited about 10 percent canola plant vigor.

Canola plant yield was evaluated at 107 days after the canola seed emerged from the ground described above. FIG. 4 shows canola the plant yield at 107 days. As depicted in FIG. 4, the low use rate of sulfoxaflor facilitated a canola plant yield similar to that facilitated by the use of Helix Xtra, and the high use rate of sulfoxaflor facilitated improved canola plant yield as compared to the use of Helix Xtra. The low use rate of sulfoxaflor resulted in a canola plant yield of about 4050 kilograms (Kg)/hectare (ha), the high use rate of sulfoxaflor resulted in a canola plant yield of about 4500 kg/ha, and the use of Helix Xtra resulted in a canola plant yield of about 3900 kg/ha. The untreated canola seeds exhibited a canola plant yield of about 3000 kg/ha.

## Claims

1. A method of controlling insects in the Order *Coleopteran,* comprising:
contacting at least one seed with an insecticide to control insects in the Order *Coleopteran,*
wherein the insecticide consists of *N*-substituted(6-haloalkylpyridin-3-yl)alkyl sulfoximine having the following chemical structure: 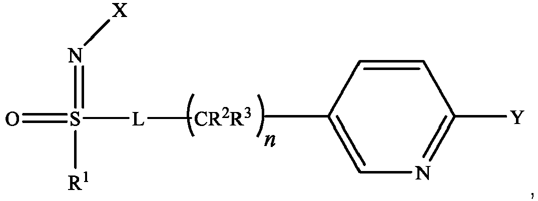 where X comprises nitrogen dioxide (NO₂), cyanide (CN), or COOR⁴;
L comprises a single bond, or R¹, S, and L taken together comprise a 4-, 5-, or 6-membered ring;
R¹ comprises a (C₁-C₄) alkyl;
R² and R³ independently comprise hydrogen (H), methyl, ethyl, fluoro, chloro, or bromo; n comprises an integer from 0 to 3;
Y comprises a (C₁-C₄) haloalkyl; and
R⁴ comprises a (C₁-C₄) alkyl;
wherein the insects in the Order *Coleopteran* are flea beetles.

2. The method of claim 1, wherein the *N*-substituted(6-haloalkylpyridin-3-yl)alkyl sulfoximine comprises the following chemical structure:

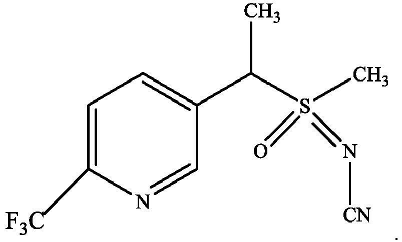

3. The method of claim 1, wherein contacting at least one seed with an insecticide to control insects in Order *Coleopteran* comprises contacting the at least one seed with the insecticide consisting of *N*-substituted(6-haloalkylpyridin-3-yl)alkyl sulfoximine to control flea beetles in at least one of genus *Phyllotreta* and genus *Psylliodes,* preferably at least one of *Phyllotreta armoraciae, Phyllotreta cruciferae, Phyllotreta pusilla, Phyllotreta nemorum, Phyllotreta robusta, Phyllotreta striolata, Phyllotreta undulata, Psylliodes chrysocephala,* and *Psylliodes punctulata.*

4. The method of claim 1, wherein the at least one seed is produced from a plant in genus *Brassica,* wherein the at least one seed preferably comprises at least one of *B*. *napus, B. juncea, B. carinata, B. rapa, B. oleracea, B. rupestris, B. septiceps, B. nigra, B. narinosa, B. perviridus, B. tournefortii,* and *B*. *fructiculosa.*

5. The method of claim 1, wherein contacting at least one seed with an insecticide comprises applying the insecticide consisting of *N*-substituted(6-haloalkylpyridin-3-yl)alkyl sulfoximine to the at least one seed before sowing the at least one seed.

6. The method of claim 1, wherein contacting at least one seed with an insecticide comprises at least one of spraying, coating, dusting, and soaking the at least one seed with the insecticide consisting of *N*-substituted(6-haloalkylpyridin-3-yl)alkyl sulfoximine.

7. The method of claim 1, wherein contacting at least one seed with an insecticide comprises applying multiple applications of the insecticide consisting of *N*-substituted(6-haloalkylpyridin-3-yl)alkyl sulfoximine to the at least one seed.

8. The method of claim 1, wherein contacting at least one seed with an insecticide comprises contacting the at least one seed with a formulation comprising the *N*-substituted(6-haloalkylpyridin-3-yl)alkyl sulfoximine and at least one inert carrier.

9. The method of claim 8, wherein the formulation further comprises at least one adjuvant material.

10. The method of claim 1, comprising:
applying the insecticide consisting of sulfoxaflor to at least one seed to control at least one flea beetle species.

11. The method of claim 10, wherein the at least one flea beetle species comprises at least one of Altica ambiens (alder flea beetle), Altica canadensis (prairie flea beetle), Altica chalybaea (grape flea beetle), Altica prasina (poplar flea beetle), Altica rosae (rose flea beetle), Altica Sylvia (blueberry flea beetle), Altica ulmi (elm flea beetle), Chaetocnema pulicaria (corn flea beele), Chaetocnema conofinis (sweet potato flea beetle), Epitrix cucumeris (potato flea beetle), Systena blanda (palestripped flea beetle), and Systena frontalis (redheaded flea beetle).

12. The method of claim 10, wherein the at least one seed comprises at least one canola seed.

13. The method of claim 10, wherein the at least one flea beetle species comprises Phyllotreta cruciferae.

14. A method of seed treatment, comprising:
contacting at least one seed with an insecticidally effective amount of insecticide to protect the at least one seed and other plant parts developing therefrom from damage effectuated by *Coleopteran* insects, wherein the insecticide consists of sulfoxaflor and the Coleopteran insects are flea beetles.

15. The method of claim 14, wherein contacting the at least one seed with an insecticidally effective amount of an insecticide comprises applying a formulation comprising an insecticide which consists of sulfoxaflor, at least one inert carrier, and at least one adjuvant material to the at least one seed.

## Patentansprüche

1. Ein Verfahren zur Bekämpfung von Insekten in der Ordnung *Coleoptera* umfassend:
In-Kontakt-Bringen mindestens eines Samens mit einem Insektizid, um Insekten in der Ordnung *Coleoptera* zu bekämpfen,
wobei das Insektizid aus N-substituiertem (6-Halogenalkylpyridin-3-yl)alkyl-sulfoximin mit der folgenden chemischen Formel besteht: 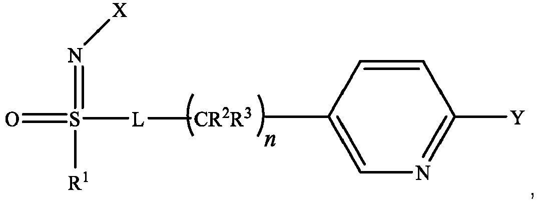 wobei X Nitro (NO₂), Cyano (CN) oder COOR⁴ umfasst;
L eine Einfachbindung umfasst oder R¹, S und L zusammengenommen einen 4-, 5- oder 6-gliedrigen Ring umfassen;
R¹ ein (C₁-C₄)-Alkyl umfasst;
R² und R³ unabhängig Wasserstoff (H), Methyl, Ethyl, Fluor, Chlor oder Brom umfassen; n eine ganze Zahl von 0 bis 3 umfasst;
Y ein (C₁-C₄)-Halogenalkyl umfasst; und
R⁴ ein (C₁-C₄)-Alkyl umfasst;
wobei die Insekten in der Ordnung *Coleoptera* Flohkäfer sind.

2. Das Verfahren gemäß Anspruch 1, wobei das N-substituierte (6-Halogen-alkylpyridin-3-yl)alkylsulfoximin die folgende chemische Struktur umfasst:

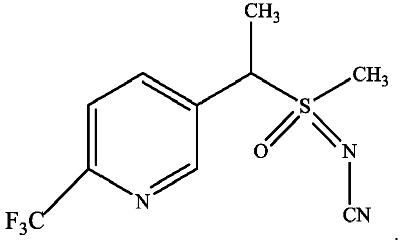

3. Das Verfahren gemäß Anspruch 1, wobei das In-Kontakt-Bringen des mindestens einen Samens mit einem Insektizid, um Insekten in der Ordnung *Coleoptera* zu bekämpfen, das In-Kontakt-Bringen des mindestens einen Samens mit dem Insektizid bestehend aus N-substituiertem (6-Halo-genalkylpyridin-3-yl)alkylsulfoximin umfasst, um Flohkäfer in mindestens einer von der Gattung *Phyllotreta* und der Gattung *Psylliodes* zu bekämpfen, vorzugsweise mindestens eine von *Phyllotreta armoraciae, Phyllotreta cruciferae, Phyllotreta pusilla, Phyllotreta nemorum, Phyllotreta robusta, Phyllotreta striolata, Phyllotreta undulata, Psylliodes chrysocephala* und *Psylliodes punctulata.*

4. Das Verfahren gemäß Anspruch 1, wobei der mindestens eine Samen aus einer Pflanze in der Gattung Brassica erzeugt wird, wobei der mindestens eine Samen vorzugsweise mindestens eines von *B. napus, B. juncea, B. carinata, B. rapa, B. oleracea, B. rupestris, B. septiceps, B. nigra, B. narinosa, B. perviridus, B. tournefortii* und *B*. *fructiculosa* umfasst.

5. Das Verfahren gemäß Anspruch 1, wobei das In-Kontakt-Bringen mindestens eines Samens mit einem Insektizid das Aufbringen des Insektizids bestehend aus N-substituiertem (6-Halogenalkylpyridin-3-yl)alkylsulfoximin auf den mindestens einen Samen vor dem Aussäen des mindestens einen Samens umfasst.

6. Das Verfahren gemäß Anspruch 1, wobei das In-Kontakt-Bringen mindestens eines Samens mit einem Insektizid mindestens eines von Besprühen, Beschichten, Bestäuben und Tränken des mindestens einen Samens mit dem Insektizid bestehend aus N-substituiertem (6-Halogenalkylpyridin-3-yl)alkylsulfoximin umfasst.

7. Das Verfahren gemäß Anspruch 1, wobei das In-Kontakt-Bringen mindestens eines Samens mit einem Insektizid das Aufbringen mehrerer Anwendungen des Insektizids bestehend aus N-substituiertem (6-Halogen-alkylpyridin-3-yl)alkylsulfoximin auf den mindestens einen Samen umfasst.

8. Das Verfahren gemäß Anspruch 1, wobei das In-Kontakt-Bringen mindestens eines Samens mit einem Insektizid das In-Kontakt-Bringen des mindestens einen Samens mit einer Formulierung umfassend das N-substituierte (6-Halogenalkylpyridin-3-yl)alkylsulfoximin und mindestens einen inerten Träger umfasst.

9. Das Verfahren gemäß Anspruch 8, wobei die Formulierung des Weiteren mindestens ein Adjuvans umfasst.

10. Das Verfahren gemäß Anspruch 1, umfassend:
Aufbringen des Insektizids bestehend aus Sulfoxaflor auf mindestens einen Samen, um mindestens eine Flohkäferart zu bekämpfen.

11. Das Verfahren gemäß Anspruch 10, wobei die mindestens eine Flohkäferart mindestens eine von *Altica ambiens, Altica canadensis, Altica chalybaea, Altica prasina* (Pappelflohkäfer), *Altica rosae* (Rosenflohkäfer), *Altica Sylvia* (Heidelbeer-Blattfloh), *Altica ulmi* (Ulmenflohkäfer), *Chaetocnema pulicaria* (Maiserdfloh), *Chaetocnema conofinis, Epitrix cucumeris* (Amerikanischer Kartoffelerdfloh), *Systena blanda* und *Systena frontalis* umfasst.

12. Das Verfahren gemäß Anspruch 10, wobei der mindestens eine Samen mindestens einen Rapssamen umfasst.

13. Das Verfahren gemäß Anspruch 10, wobei die mindestens eine Flohkäferart *Phyllotreta cruciferae* umfasst.

14. Ein Verfahren zur Samenbehandlung umfassend:
In-Kontakt-Bringen mindestens eines Samens mit einer insektizid wirksamen Menge an Insektizid, um den mindestens einen Samen und andere Pflanzenteile, die sich daraus entwickeln, vor Schaden, der durch *Coleoptera*-Insekten verursacht wird, zu schützen, wobei das Insektizid aus Sulfoxaflor besteht und die Coleoptera-Insekten Flohkäfer sind.

15. Das Verfahren gemäß Anspruch 14, wobei das In-Kontakt-Bringen des mindestens einen Samens mit einer insektizid wirksamen Menge eines Insektizids das Aufbringen einer Formulierung umfassend ein Insektizid, welches aus Sulfoxaflor besteht, mindestens einen inerten Träger und mindestens ein Adjuvans auf den mindestens einen Samen umfasst.

## Revendications

1. Procédé de lutte contre des insectes appartenant à l'ordre *Coleoptera,* comprenant :
le fait de mettre au moins une semence en contact avec un insecticide pour lutter contre des insectes appartenant à l'ordre *Coleoptera,*
dans lequel l'insecticide consiste en une (6-halogénoalkylpyridin-3-yl)alkyl-sulfoximine substituée sur un atome d'azote, ayant la structure chimique suivante : 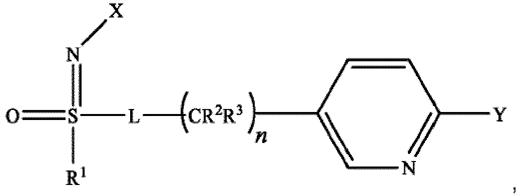 où X comprend un groupe dioxyde d'azote (NO₂), cyanure (CN), ou COOR⁴ ;
L comprend une liaison simple, ou R¹, S, et L considérés ensemble comprennent un cycle à 4, 5 ou 6 chaînons ;
R¹ comprend un groupe alkyle en C₁-C₄ ;
R² et R³ comprennent indépendamment un atome d'hydrogène (H), un groupe méthyle, éthyle, fluoro, chloro, ou bromo ; n comprend un nombre entier valant de 0 à 3 ;
Y comprend un groupe halogénoalkyle(C₁-C₄) ; et
R⁴ comprend un groupe alkyle en C₁-C₄ ;
dans lequel les insectes appartenant à l'ordre *Coleoptera* sont des altises.

2. Procédé selon la revendication 1, dans lequel la (6-halogénoalkyl-pyridin-3-yl)alkylsulfoximine substituée sur un atome d'azote comprend la structure chimique suivante :

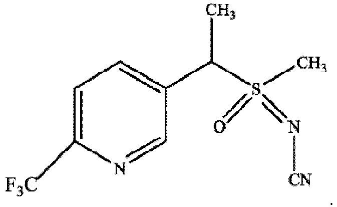

3. Procédé selon la revendication 1, dans lequel le fait de mettre au moins une semence en contact avec un insecticide pour lutter contre des insectes appartenant à l'ordre *Coleoptera* comprend le fait de mettre ladite au moins une semence en contact avec l'insecticide consistant en une (6-halogénoalkylpyridin-3-yl)alkyl-sulfoximine substituée sur un atome d'azote pour lutter contre des altises appartenant à au moins l'un parmi le genre *Phyllotreta* et le genre *Psylliodes,* de préférence à au moins l'une des espèces *Phyllotreta armoraciae, Phyllotreta cruciferae, Phyllotreta pusilla, Phyllotreta nemorum, Phyllotreta robusta, Phyllotreta striolata, Phyllotreta undulata, Psylliodes chrysocephala,* et *Psylliodes punctulata.*

4. Procédé selon la revendication 1, dans lequel ladite au moins une semence est produite à partir d'une plante appartenant au genre *Brassica,* ladite au moins une semence comprenant de préférence au moins une semence de *B. napus, B. juncea, B. carinata, B. rapa, B. oleracea, B. rupestris, B. septiceps, B. nigra, B. narinosa, B. perviridus, B. tournefortii,* et *B. fructiculosa.*

5. Procédé selon la revendication 1, dans lequel le fait de mettre au moins une semence en contact avec un insecticide comprend appliquer sur ladite au moins une semence avant le semis de ladite au moins une semence l'insecticide consistant en une (6-halogénoalkylpyridin-3-yl)alkylsulfoximine substituée sur un atome d'azote.

6. Procédé selon la revendication 1, dans lequel le fait de mettre au moins une semence en contact avec un insecticide comprend au moins un(e) parmi le traitement par pulvérisation, l'enrobage, le poudrage, et le trempage de ladite au moins une semence avec l'insecticide consistant en une (6-halogénoalkylpyridin-3-yl)alkyl-sulfoximine substituée sur un atome d'azote.

7. Procédé selon la revendication 1, dans lequel le fait de mettre au moins une semence en contact avec un insecticide comprend appliquer de multiples applications sur ladite au moins une semence de l'insecticide consistant en une (6-halogénoalkylpyridin-3-yl)alkylsulfoximine substituée sur un atome d'azote.

8. Procédé selon la revendication 1, dans lequel le fait de mettre au moins une semence en contact avec un insecticide comprend mettre ladite au moins une semence en contact avec une formulation comprenant la (6-halogénoalkylpyridin-3-yl)alkylsulfoximine substituée sur un atome d'azote et au moins une substance de support inerte.

9. Procédé selon la revendication 8, dans lequel la formulation comprend en outre au moins une substance qui consiste en un adjuvant.

10. Procédé selon la revendication 1, comprenant :
appliquer l'insecticide consistant en sulfoxaflor sur au moins une semence pour lutter contre au moins une espèce d'altise.

11. Procédé selon la revendication 10, dans lequel ladite au moins une espèce d'altise comprend au moins une parmi *Altica ambiens* (altise de l'aulne), *Altica canadensis* (altise du Canada), *Altica chalybaea* (altise de la vigne), *Altica prasina* (altise du peuplier), *Altica rosae* (altise du rosier), *Altica Sylvia* (altise de l'airelle), *Altica ulmi* (altise de l'orme), *Chaetocnema pulicaria* (altise du maïs), *Chaetocnema confinis* (altise de la patate douce), *Epitrix cucumeris* (altise de la pomme de terre), *Systena blanda* (dendroctone du Pacifique), et *Systena frontalis* (altise à tête rouge).

12. Procédé selon la revendication 10, dans lequel ladite au moins une semence comprend au moins une semence de colza canola.

13. Procédé selon la revendication 10, dans lequel ladite au moins une espèce d'altise comprend *Phyllotreta cruciferae.*

14. Procédé de traitement de semence, comprenant :
le fait de mettre au moins une semence en contact avec une quantité à effet insecticide d'insecticide pour protéger ladite au moins une semence et d'autres parties de plante se développant à partir de cette dernière contre un dommage effectué par des insectes appartenant à l'ordre *Coleoptera,* dans lequel l'insecticide consiste en sulfoxaflor et les insectes appartenant à l'ordre *Coleoptera* sont des altises.

15. Procédé selon la revendication 14, dans lequel le fait de mettre au moins une semence en contact avec une quantité à effet insecticide d'insecticide comprend appliquer sur ladite au moins une semence une formulation comprenant un insecticide qui consiste en sulfoxaflor, au moins une substance de support inerte, et au moins une substance qui consiste en un adjuvant.
